# EUROPEAN PATENT SPECIFICATION

(11) **EP 2 421 232 B1**
(45) Date of publication and mention of the grant of the patent: **22.10.2014**
(21) Application number: 10172944.0
(22) Date of filing: 16.08.2010
(51) Int. Cl.: H04M 1/725, H04M 1/73, H04W 52/02, G06K 7/00

(54) **Mobile wireless communications device provided enhanced switching between active and power saving near field communication (NFC) modes and related methods**
Mobiles Funkkommunikationsvorrichtungsprotokoll mit verbesserter Umschaltung zwischen den Modi aktiver und energiesparender Nahfeldkommunikation (NFC) und zugehörige Verfahren
Dispositif de communications sans fil mobile doté d'une commutation améliorée entre modes de communication de champ proche (NFC) active et à économie d'énergie et procédés correspondants

(43) Date of publication of application: 22.02.2012
(73) Proprietor: BlackBerry Limited, Waterloo, ON N2K 0A7 (CA)
(72) Inventor: Griffin, Jason Tyler, Waterloo Ontario N2L 3W8 (CA); Walker, David Ryan, Waterloo Ontario N2L 3W8 (CA); Moosavi, Vahid, Waterloo Ontario N2L 3W8 (CA)
(74) Representative: Roberts, Gwilym Vaughan

(56) References cited:
- WO-A1-2006/000910
- WO-A1-2007/027465
- WO-A1-2008/103001
- US-A1- 2004 259 542
- US-A1- 2004 266 386
- US-A1- 2005 083 181

## Description

### Technical Field

This application relates to the field of communications, and more particularly, to mobile wireless communications devices and related methods that use Near Field Communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

some mobile devices incorporate contactless card technology and/or Near Field Communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

With NFC technology becoming more commonplace, it is now used with portable wireless communications devices in association with other short-range wireless communications, such as a wireless Bluetooth connection. For example, an NFC connection is often used to establish or authenticate a wireless Bluetooth connection, which is in turn used for general data communications.

WO 2006/000910 discloses a method, terminal and computer program product which are capable of adjusting the power consumption of short-range communication transceivers, such as RFID, IR transceivers or the like. Energy management of the transceiver is achieved by limiting activation of the transceiver to periods of user-interface illumination. The transceiver, therefore, uses less power because it is only activated by an intentional gesture by the user, i.e., a gesture that will initiate the illumination of a user-interface. In addition, the user of terminal is aware, via observation of the illumination, that the terminal is in an active transceiver reading state and, thus, the invention provides for a safe environment in which inadvertent reading of tags or data communication is lessened.

US 2004/0259542 discloses a method for controlling the power saving properties in a terminal, which utilizes cellular phone technology and short range radio frequency wireless communication features in order to increase the operative life of the batteries, and a terminal utilizing the method. The activity state of the short range wireless communication utilization in the terminal determines the level of the short range wireless communication power save mode.

WO 2007/027465 discloses a method for regulating power consumption during page scanning operations in a Bluetooth enabled communication device having a power source and a processor that is configured to communicate according to a plurality of page scanning intervals. The method includes assessing trigger events to dynamically adjust page scanning interval output values and accordingly adjusting a power consumption level in accordance with the page scanning interval output values. The variable page scanning intervals change from idle, slow and fast according to their type.

US 2005/0083181 discloses a method, terminal and computer program product which determine the context of the mobile terminal associated with an RFID reader and adjust the power consumption of the RFID reader based upon the determined context relative to at least one previous context determination. To adjust the power consumption, the frequency at which the RFID reader is actuated may be altered. Thus, the power consumption of the RFID reader may be reduced when no change in the context of the mobile terminal is determined and/or may be increased when a change in the context of the mobile terminal is determined. Due to the adjustment of power consumption by RFID readers, power is conserved in the mobile terminals associated with RFID readers, which permits the mobile terminals and RFID readers to operate longer without requiring charging or replacement of the power supply.

Aspects of the invention are set out in the accompanying independent claims.

### Brief Description of the Drawings

FIG. 1 is a schematic block diagram of a Near Field Communication (NFC) system in accordance with an exemplary aspect providing NFC power state switching.

FIG. 2 is a front view of an NFC-enabled cellular device which may be used in accordance with an exemplary aspect to implement the NFC power state switching.

FIGS. 3 and 4 are exemplary screen prints which may be provided on the display of the device of FIG. 2 upon implementation of NFC power state switching.

FIG. 5. is a schematic block diagram of an exemplary NFC device of the system of FIG. 1 shown in greater detail.

FIGS. 6 and 7 are flow diagrams illustrating NFC power switching method aspects associated with the system or devices of FIG. 1.

FIG. 8 is a schematic block diagram of an alternative NFC system in accordance with an exemplary aspect providing synchronized peer-to-peer recognition features.

FIG. 9 is a schematic block diagram of an exemplary NFC device of the system of FIG. 8 shown in greater detail.

FIG. 10 is a flow diagram illustrating synchronized NFC peer-to-peer recognition method steps associated with the system or devices of FIG. 8.

FIGS. 11 and 12 are signal timing diagrams illustrating signal synchronization operations performed by the devices of the system of FIG. 8.

FIG. 13 is a schematic block diagram of an exemplary mobile wireless communications device providing enhanced NFC power saving mode switching in accordance with another exemplary embodiment.

FIGS. 14 and 15 are schematic block diagrams of exemplary alternative embodiments of the mobile wireless communications device of FIG. 13.

FIG. 16 is a flow diagram illustrating method aspects associated with the system of FIG. 13.

FIG. 17 is a schematic block diagram illustrating exemplary components of a mobile wireless communications device that may be used in accordance with the systems of FIGS. 1, 8, or 13.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a mobile wireless communications device is disclosed herein which may include a portable housing and a near-field communication (NFC) circuit carried by the portable housing and being switchable between a first (e.g., active) active NFC mode and a second (e.g., power saving) NFC mode. The mobile wireless communications device may further include a processor carried by the portable housing and coupled to the NFC circuit and configured to switch the NFC circuit between the active NFC mode and the power saving NFC mode at a first frequency based upon a first triggering event, and switch the NFC circuit between the active NFC mode and the power saving NFC mode at a second frequency lower than the first frequency based upon a second triggering event different than the first triggering event. As such, the mobile wireless communications device may advantageously use the active NFC mode on a continuous basis to expedite recognition and synchronization with other NFC devices, yet still provide power savings at appropriate times based upon the second triggering event.

More particularly, the mobile wireless communications device may further include a display carried by the portable housing and coupled to the processor and being switchable between an illuminated mode and a non-illuminated mode. As such, the first triggering event may comprise the display switching to the illuminated mode, and the second triggering event may comprise the display switching to the non-illuminated mode. In addition, the processor may be further configured to switch the NFC circuit at the second frequency after a delay period from the display switching to the non-illuminated mode.

Furthermore, the mobile wireless communications device may further include at least one input device carried by the portable housing and coupled to the processor. As such, the first triggering event may comprise an input from the at least one input device, and the second triggering event may comprise exceeding a threshold period since a last input from the at least one input device. By way of example, the at least one input device may comprise at least one input key, an accelerometer, etc.

In accordance with one example, the power saving NFC mode may comprise a passive NFC mode. The mobile wireless communications device may further comprise a wireless transceiver carried by the portable housing and coupled to the processor. Also, the processor may be further configured for communicating electronic mail (email) messages.

A related method aspect is for using a mobile wireless communications device, such as the one described briefly above. The method may include switching the NFC circuit between the active NFC mode and the power saving NFC mode at a first frequency based upon a first triggering event, and switching the NFC circuit between the active NFC mode and the power saving NFC mode at a second frequency lower than the first frequency based upon a second triggering event different than the first triggering event.

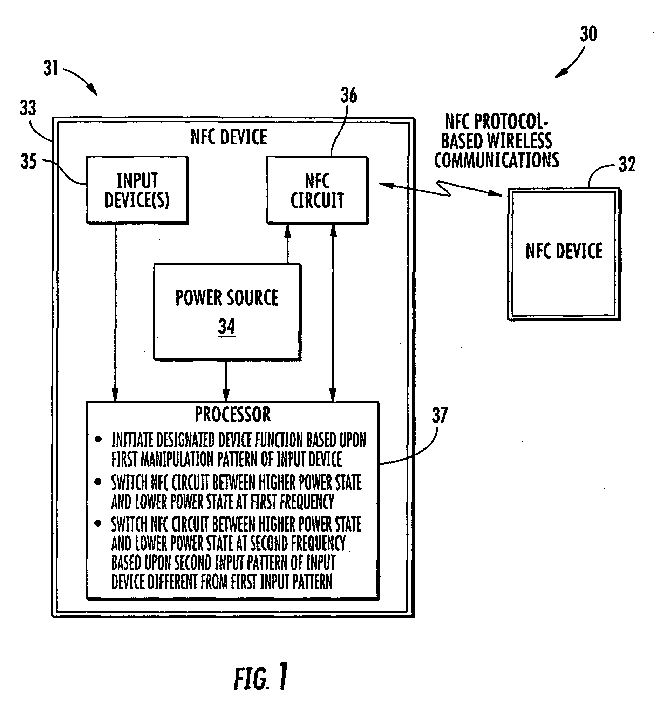

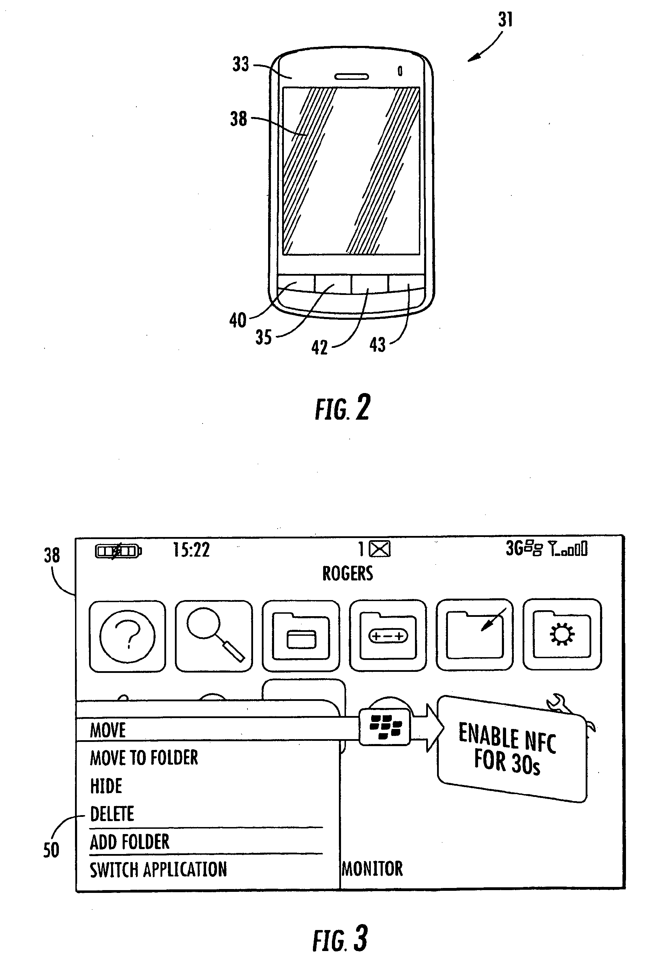

Turning now to FIGS. 1 and 2, by way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

NFC circuitry draws power when it is searching for other devices or contactless cards/tags in its vicinity. Because of privacy and security concerns, in the case of an NFC-enabled phone, it may be desirable that the device not always respond to a NFC reader that tries to charge/read the virtual card in the phone. Rather, it may be desirable that the NFC device require an action before it turns on the NFC feature and responds to readers. One such action is to require a password to be entered to activate an NFC search/recognition mode. However, entering a password may be inconvenient, time-consuming, or impractical in some circumstances. For example, when a user wants to pay for transit in a crowded subway station, it may not be practical to perform steps such as typing in a password, finding the NFC icon on the device, activating the NFC icon, etc. This problem may be exacerbated if the phone is in a locked mode, adding yet another step to be performed (i.e., unlocking the device) to place the device in the NFC recognition mode.

Another approach may be to have a separate or designated key for activating the NFC functionality. However, the space (i.e., "real estate") required for a separate, designated key to enable an NFC operational or recognition mode may be difficult to come by in many wireless communications devices. That is, with the ever-increasing amount of functionality implemented in such devices, along with the competing desire for smaller form factors, allotting the necessary real estate for such a designated NFC key simply may not be practical. Moreover, the additional cost of providing a designated key on the device may also be a drawback.

In accordance with a first aspect, an NFC system **30** illustratively includes an NFC device **31** which advantageously addresses these technical problems. More particularly, in the example embodiment the NFC system **30** illustratively includes a plurality of NFC devices, namely the NFC device **31** and a second NFC device **32.** The NFC device **31** illustratively includes a housing **33,** a power source **34** carried by the housing **33,** one or more input keys **35** carried by the housing **33** and assigned to a designated device function, and an NFC circuit **36** configured to wirelessly communicate using an NFC communications protocol. The NFC device **31** further illustratively includes a processor **37** carried by the housing **33** which is coupled to the power source **34,** the input key **35,** and the NFC circuit **36.** The device **32** may also include similar components to those described herein with reference to the NFC device **31,** but need not in all embodiments.

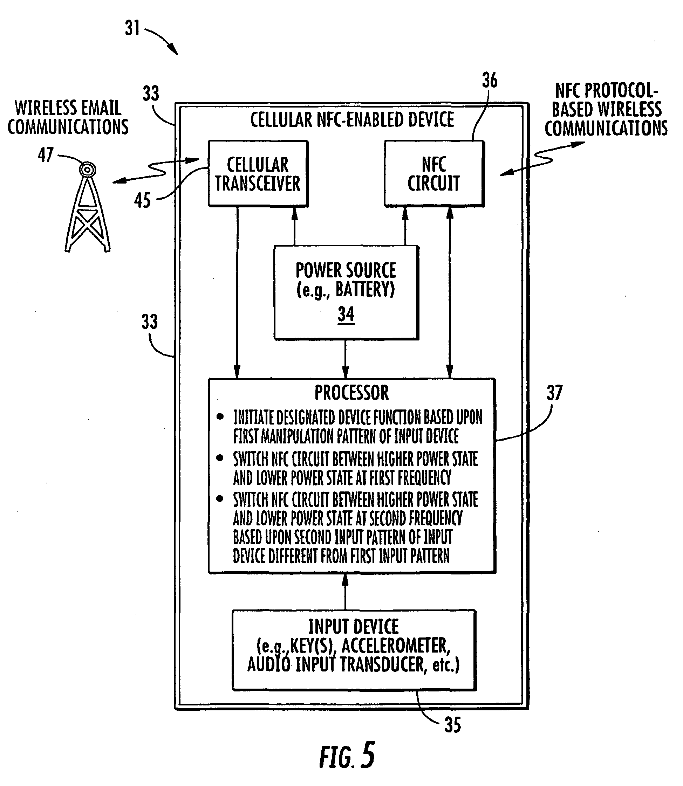

The NFC device **31** as shown in FIGS. 2 and 5 comprises a mobile wireless communications device (also referred to herein as a "mobile device") cellular smart phone enabled for NFC communications by the NFC circuit **36.** In this example embodiment, the NFC device **31** illustratively includes an off-hook key **40** (i.e., for initiating a phone call), a return key **42** for escaping a selection or navigating back through a menu, and an on-hook/power key **43,** which may be used for disconnecting a phone call as for turning the NFC device **31** on or off by holding the key down for a designated period of time. As used herein, the term "key" means an input device that is pressed or actuated to initiate a device function or provide an input, including buttons, keypad keys, trackballs, scroll wheels, etc. It should also be noted that a display **38** of the NFC device **31** shown in FIG. 2 may be a touch screen display, and in such embodiments the input keys **35** used to initiate the NFC operations described herein may advantageously be touch screen keys.

Moreover, the NFC device **31** further illustratively includes a cellular transceiver **45** carried by the housing **33** and coupled to the power source **34** and the processor **37.** Furthermore, the processor 37 may also be configured for communicating wireless voice and data via the cellular transceiver **45** via a cellular communications network (represented as a cellular tower **47** in FIG. 5), as will be described further below. By way of example, the data communications may include email messages, as shown in FIG. 5, although other data (e.g., Web data, etc.) may also be communicated. Furthermore, in some embodiments the NFC device **31** may in addition (or instead) include other types of wireless communications circuits capable of transmitting voice or other data, such as a wireless LAN, WiMAX, etc., circuit.

In the present example, the input key **35** which is used for initiating NFC operations as described further below is a menu key for generating navigation menus on the display **38.** That is, the designated device function of the input (i.e., menu) key **35** is generating navigation menus, and this designated function is typically performed when the input key **35** is depressed once. Other input devices may also be used in some embodiments, such as an audio input device (e.g., microphone), accelerometer, etc.

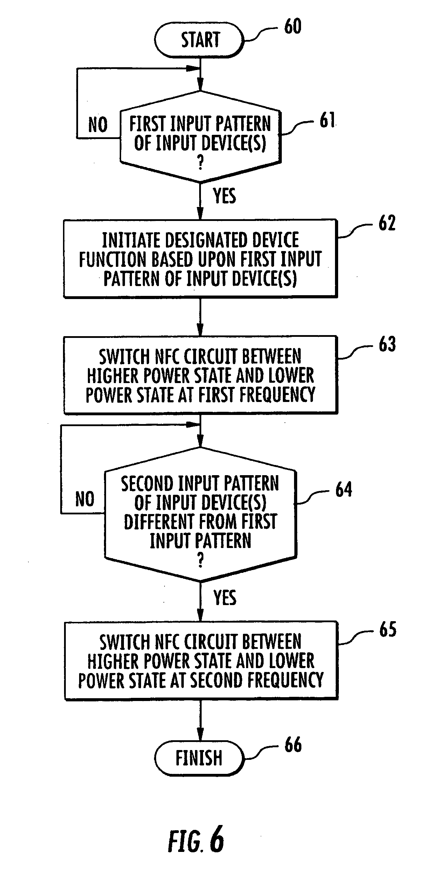

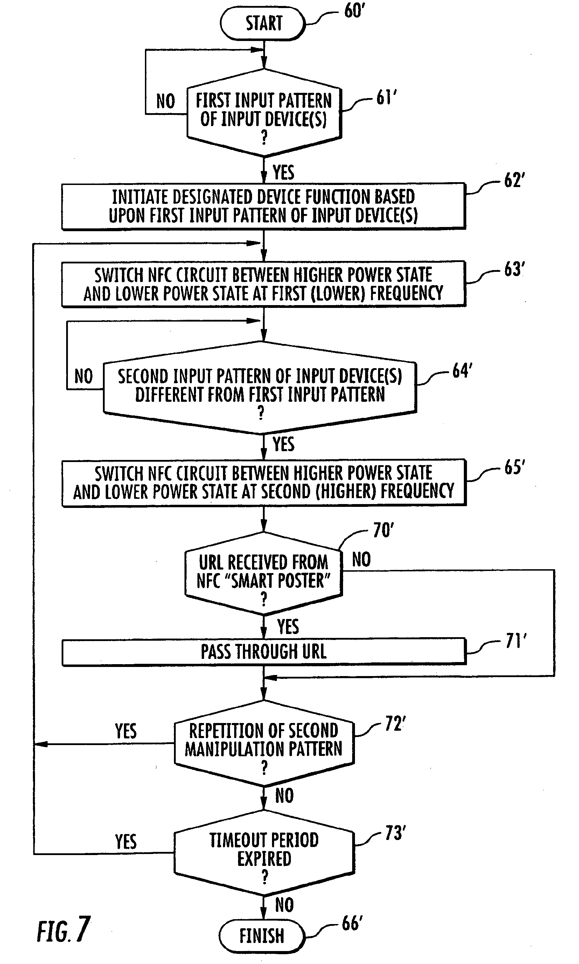

Operation of the processor **37** and the advantageous NFC power state switching features performed thereby will now be described with reference to FIGS. 6 and 7. Beginning at Block **60,** the processor **37** is advantageously configured to initiate the designated device function (menu generation in the present example) based upon a first input or manipulation pattern of the input key **35,** at Blocks **61-62.** As noted above, this first manipulation pattern comprises a single actuation of the input key **35,** although a first different actuation pattern may be used in other embodiments. Moreover, a different input key may be selected for initiation of NFC operations, such as the on-hook key **43,** a side convenience key designated for a different designated device function, etc. Furthermore, more than one such key may be designated to initiate the same NFC functionality.

The processor **37** is further configured to switch the NFC circuit **36** between a higher power state and a lower power state at a first frequency, at Block **63.** More particularly, this operation would correspond to a typical low power mode as specified by the above-described NFC standard materials, in which the NFC circuit **36** cycles on (high power) and off (low power), usually every three seconds. Such power cycling is advantageous because in the high power state, the NFC circuit **36** is configured to generate a radio frequency (RF) field to initiate NFC communications with the other NFC device **32.** To leave this field on continuously in the NFC device **31** where the power source **34** is a battery (as seen in the more detailed view of the NFC device **31** illustrated in FIG. 5) would deplete the battery at an undesirable rate, which is why the low power recognition mode may be used.

Yet, a difficultly with the standard low power mode is that three seconds is a relatively long time in terms of NFC communications to wait for device recognition to occur, and may not be practical for some applications which require relatively quick acquisition and recognition. Thus, in some embodiments, the processor **37** may also advantageously be configured to switch the NFC circuit **36** between the higher power state and the lower power state at a second frequency different than the first frequency based upon a second manipulation pattern of the input key **35** different from the first manipulation pattern, at Blocks **64-65,** thus concluding the method illustrated in FIG. 6 (Block **66).**

By way of example, the second manipulation pattern may include multiple (e.g., two) actuations or pressings of the input key **35** in succession, i.e., within a threshold period or window of time (e.g., one second or less). Moreover, the second frequency may be faster than the first frequency, e.g., about one second (or less), which is three times faster than the above-noted first frequency of three seconds. However, in different embodiments the first and second frequencies may take other values besides those example values set forth herein. As such, the NFC device **31** advantageously provides desired NFC device recognition without undue delay, yet while still maintaining power savings from low-power operation.

The processor **37** may be further advantageously configured to switch the NFC circuit **36** from the second frequency back to the first frequency based on a repetition of the second manipulation pattern of the input key **35,** at Block **72'** (FIG. 7). For example, it may be desirable to switch the NFC device **31** to the second frequency when approaching an NFC tag/reader (e.g., a subway or ticket kiosk, etc.) and quick recognition is required, but to switch back when no longer in proximity of the NFC tag/reader to save power, as well as for security reasons.

In this regard, when the second manipulation pattern occurs and power is cycled to the NFC circuit **36** at the second frequency, this may indicate to the processor **37** that the NFC device **31** is in proximate to a trusted NFC device, and therefore the processor **37** may temporarily lessen security requirements when authorizing and communicating with the trusted NFC device. For example, the processor **37** may proceed directly to communicate with the trusted NFC device, and in the case of a "smart poster" NFC device, such as one confiqured to pass a Uniform Resource Locator (URL), the processor **37** may automatically direct a browser application thereof to the URL without prompting for permission to proceed to the designated location, at Blocks **70'-71'.**

For the same reasons, the processor **37** may be configured to switch the NFC circuit **36** from the second frequency back to the first frequency after a timeout period, at Block **73'.** In other words, the processor **37** may perform an automatic switching back to the first frequency based upon the timeout condition, in addition to, or instead of, the manual switch back described above (i.e., resulting from the second manipulation pattern being initiated again).

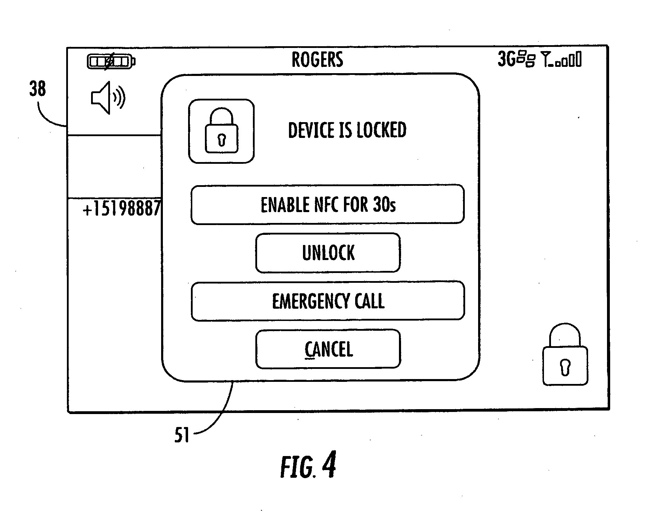

Example menus **50, 51** that may be generated by the input (i.e., menu) key **35** are respectively shown in FIGS. 3 and 4. More particularly, the menu **50** is generated by the processor **37** when the NFC device **31** is in a normal operating mode and the input key **35** is actuated. In some embodiments, if the display **38** is not illuminated, a first actuation may initially illuminate the display, and a subsequent actuation may then generate the menu **50.** The menu options provided by the processor **37** in the menu **50** may vary depending upon the various operations being performed by the device (e.g., the menu generated on a "home" screen will be different than the one generated while an email application is open, etc.). In the illustrated example, upon initiation of the first manipulation pattern the menu **50** includes the following options: move, move to folder, hide, delete, add folder, and switch application. So, in the present example, the menu **50** would be displayed upon a first actuation or pressing of the input key **35.**

However, when the second manipulation pattern of the input key **35** is detected, i.e., a double tap or second actuation/pressing of the input key **35,** then the processor **37** causes switching of the NFC circuit **36** based upon the second frequency, which is indicated by an arrow extending from the menu **50** and notation that this NFC operational mode has been enabled for thirty seconds. However, it should be noted that other timeout periods greater or lesser than thirty seconds may be used in some embodiments (e.g., one minute, two minutes, etc.), and in other embodiments the timeout period may not be used at all.

Turning to the menu **51,** here the processor **37** generates a menu on the display **38** for enabling initiation of NFC device recognition and communications with the other NFC device **32** upon detection thereof from a "locked" device mode. That is, the menu **51** is generated from the locked mode, meaning that the keypad (whether touch screen or individual buttons) or other convenience keys are disabled by the processor **37.** In some locked modes, the display **38** may be changed to a default image as well (e.g., a blank screen with only a background color/image and no icons). In this case, the menu **51** generated by the processor **37** may advantageously be different than the menu **50,** since there is a relatively small selection of operations that may be performed from the locked mode. So, when in the locked mode and the input key **35** is actuated once, the menu **51** is displayed and illustratively includes the following options: enable NFC for thirty seconds; unlock; emergency call; and cancel. The "enable NFC for 30s" option is highlighted so that upon a second actuation of the input key **35** this option is automatically selected, again causing the processor **37** to implement switching at the second frequency. While this menu option may also be selected directly on the touch screen display **38,** a second actuation of the input key **35** typically may be performed much easier and faster.

The NFC device **31** therefore advantageously provides a relatively convenient and consistent way of enabling the NFC circuit **36** for a short period of time, which may be particularly helpful for applications with relatively low security requirements, or for relatively low-value payment transactions. The above-described implementation further advantageously utilizes an existing input key **35** on the NFC device **31** and provides for relatively easy access to enable NFC communications.

A related physical, computer-readable medium may have computer-executable instructions for causing the NFC device **31** to perform steps including initiating the designated device function based upon a first manipulation pattern of the input key **35,** and switching the NFC circuit **36** between a higher power state and a lower power state at a first frequency, as discussed above. Moreover, a further step may include switching the NFC circuit **36** between the higher power state and the lower power state at a second frequency different than the first frequency based upon a second manipulation pattern of the input key **35** different from the first manipulation pattern, again as further discussed above.

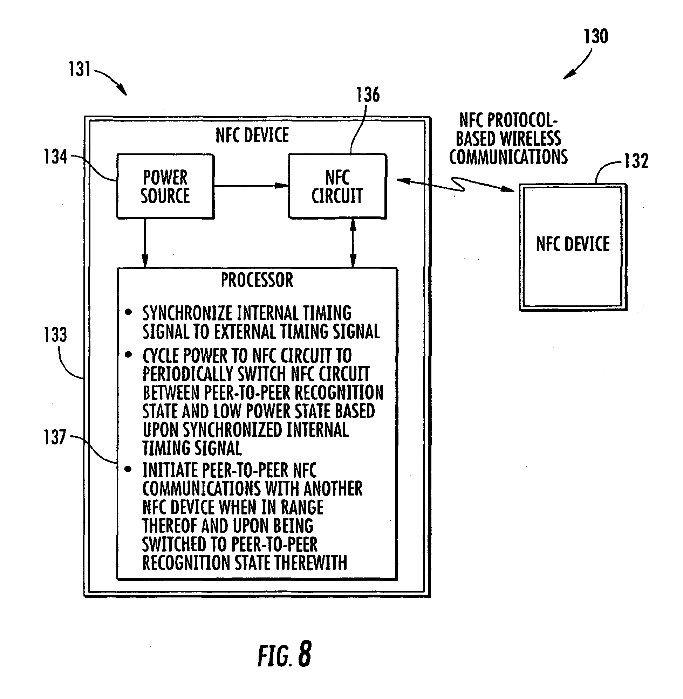

Turning now to FIGS. 8-12, another drawback of the existing NFC lower-power tag detection approach is that it does not work in conjunction with a peer-to-peer NFC mode. In accordance with another advantageous aspect, an NFC system **130** and NFC devices **131, 132** advantageously provide a low power operation when in a peer-to-peer operating mode. That is, in the NFC system **130** both devices **131, 132** are operational in a peer-to-peer NFC mode.

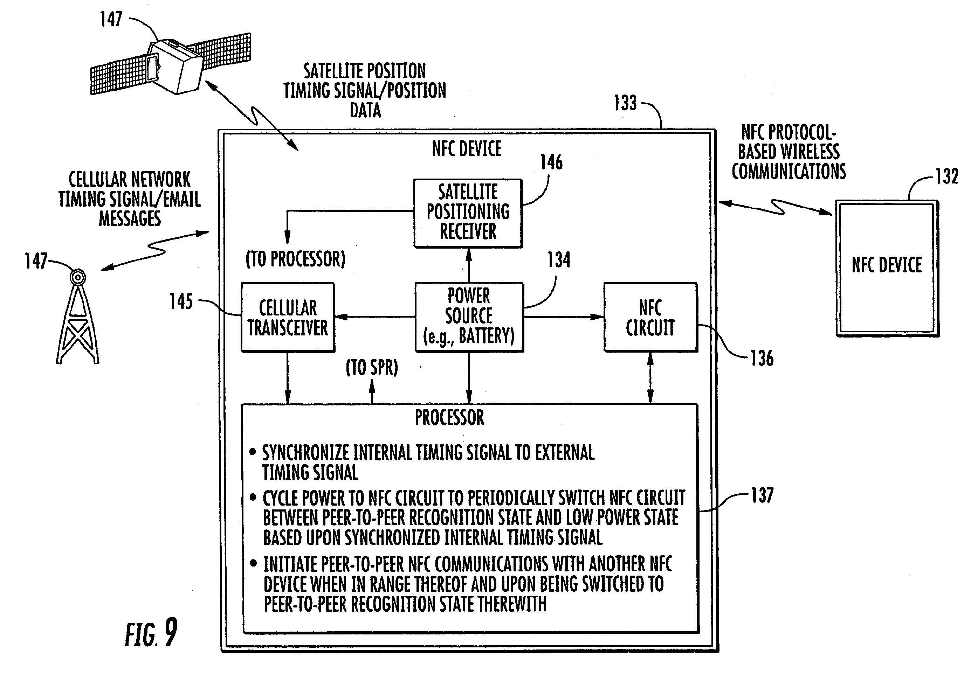

The various components illustrated in FIGS. 8 and 9 that correspond to those previously discussed above with reference to FIGS. 1 and 2 are numbered in increments of decades (i.e., the power source **34** is similar to the power source **134,** etc.) for clarity of reference. As such, to the extent these components have already been explained above that explanation will not be repeated here, and the following discussion will accordingly focus on the additional operations performed by such components in accordance with the present example.

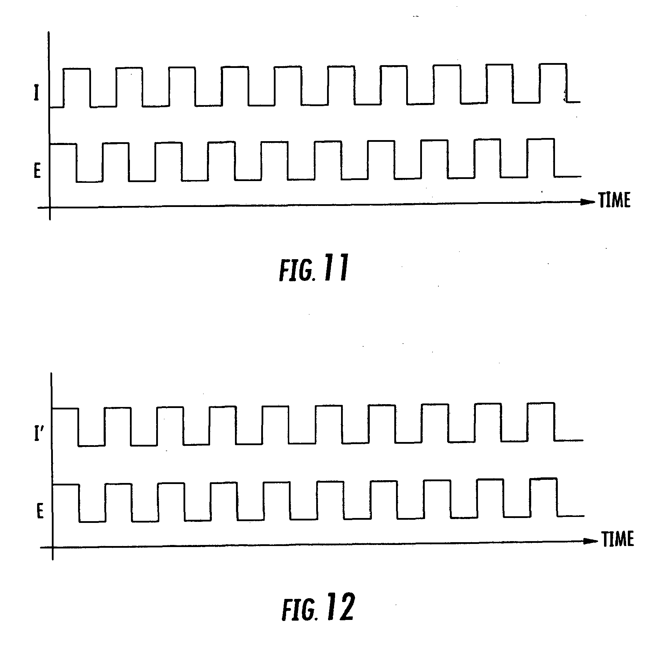

Beginning at Block **200,** the processor **137** is advantageously configured to synchronize or temporally align an internal timing signal **I** (i.e., a local timing signal)#to an external timing signal **E,** at Block **201.** The internal timing signal **I** is shown initially out of synchronization with the external timing signal **E** in FIG. 11, and FIG. 12 shown the internal timing signal **I'** after synchronization with the external timing signal **E.** It should be noted that the internal and external signals **I, E** need not be mirror images of one another to be synchronized as shown in FIG. 12, but may be synchronized in the sense that leading or trailing edges are temporally aligned (e.g., the signals could be inverted with respect to one another but still synchronized in time).

The internal timing signal **I** may be generated by the processor **137** using a variety of techniques. Furthermore, the external timing signal **E** may be obtained from a number of different sources, as seen in FIG. 9. For example, the processor **137** may be configured to synchronize the internal timing signal **I** to a cellular network timing signal as the external timing signal **E** via the cellular transceiver **145.** In accordance with another option, each NFC device **131, 132** may further include a satellite positioning receiver **146** coupled to the processor **137** and configured to receive a satellite positioning system (e.g., GPS, Galileo, GLONASS, etc.) timing signal from one or more satellites **147,** with which the processor **137** is configured to synchronize the internal timing signal to as the external timing signal **I.** Still another option is that the processor **137** may be configured to synchronize the internal timing signal **I** to the common external system timing signal **E** via the NFC circuit **136** (e.g., synchronization to GMT or other accurate time source via NFC communications, etc.).

The processor **137** is further configured to cycle power to the NFC circuit **136** to periodically switch the NFC circuit **136** between a peer-to-peer recognition state and a low power state based upon the synchronized internal timing signal **I,** at Block **202.** When NFC devices are powered up and operating in a peer-to-peer mode, they continuously generate an RF field for recognizing and communicating with other NFC devices. However, because each of the devices **131, 132** is synchronized to the same external timing signal and performs the power cycling at the same intervals, they advantageously generate their respective RF fields and perform device recognition at the same times, and thus these devices will be able to "see" each other despite now operating in a power saving mode.

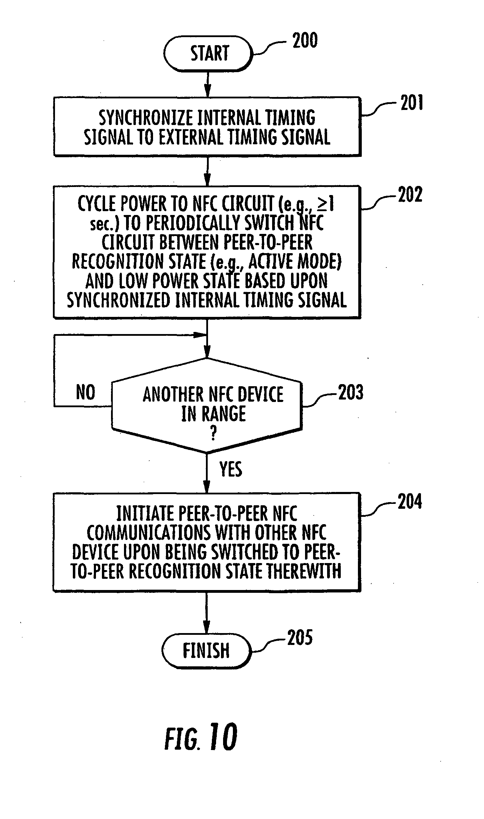

Thus, the processor **137** of the device **131** is also advantageously configured to initiate peer-to-peer NFC communications with the other device **132** when in range thereof upon being switched (e.g., simultaneously switched) to the peer-to-peer recognition state therewith, at Blocks **203-204,** thus concluding the method illustrated in FIG. 10 (Block **205).** As such, the system advantageously addresses the technical problem of providing a relatively low-power NFC peer-to-peer recognition mode, while still providing desired recognition times without undue delay.

The processor **137** may further be configured to operate the NFC circuit **136** in an active communication mode in the peer-to-peer recognition state. Furthermore, the processor **137** may be configured to cycle power to the NFC circuit **136** at various time intervals, although an interval of not greater than one second may be desirable, as shorter durations may be particularly beneficial from a rapid recognition standpoint, such as in the range of approximately 200 µs to approximately 600 µs, for example, although other durations may be used in different embodiments. Generally speaking, the interval is balanced to be long enough to provide desired power savings but also quick recognition times.

It should be noted that in the system **130,** both NFC devices **131, 132** need not be mobile wireless NFC devices. For example, some electronic devices such as televisions, printers, etc., may be enabled with NFC circuitry, but these devices are essentially stationary and typically plugged in to a building power source. As such, while power savings may not be as high a priority for stationary or wall-powered devices, such stationary devices may still operate as described above and be included in the system **130** (or the system **30** in some embodiments) to initiate NFC communications with mobile devices which utilize these techniques to conserve battery power. Moreover, it should also be noted that while two devices are shown in the above-described system **30, 130** for ease of illustration, in some embodiments more than two devices may be included in the particular system.

A related physical computer-readable medium is also provided and may have computer-executable instructions for causing the NFC device **131** to perform steps including synchronizing an internal timing signal **I** of the NFC device to an external timing signal **E,** and cycling power to the NFC circuit **136** to periodically switch the NFC circuit between a peer-to-peer recognition state and a low power state based upon the synchronized internal timing signal **I'.** A further step may include initiating peer-to-peer NFC communications with another NFC device **132** when in range thereof and upon being simultaneously switched to the peer-to-peer recognition state therewith.

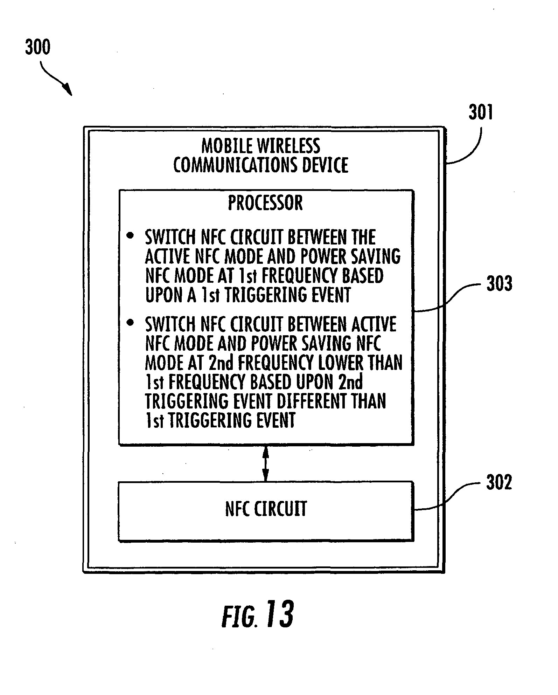

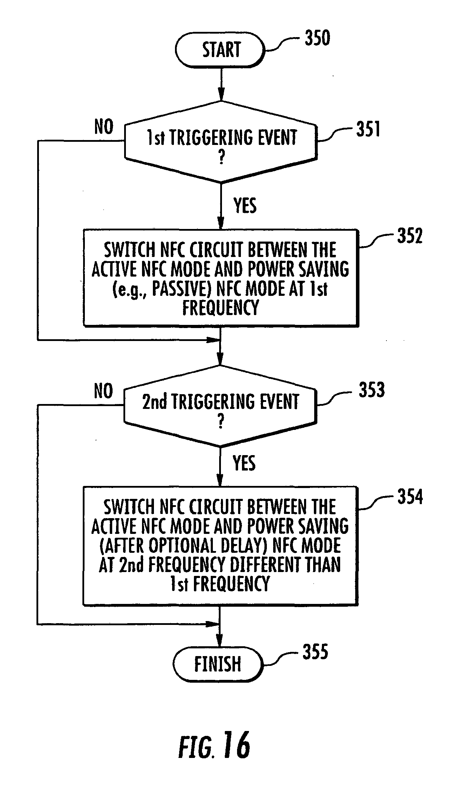

Referring now additionally to FIGS. 13-16, in accordance with another example embodiment a mobile device **300** illustratively includes a portable housing **301** and an NFC circuit **302** carried by the portable housing. As discussed above, the NFC circuit **302** may be switched between different operating modes, including an active NFC mode, and a power saving mode, such as a passive mode or an unpowered mode. The mobile device **300** further illustratively includes a processor **303** carried by the portable housing **301** that is coupled to the NFC circuit **302.** Beginning at Block **350,** the processor **303** is configured to switch the NFC circuit **302** between the active NFC mode and the power saving NFC mode at a first frequency based upon a first triggering event, at Blocks **351-352,** and switch the NFC circuit between the active NFC mode and the power saving NFC mode at a second frequency lower than the first frequency based upon a second triggering event different than the first triggering event, at Blocks **353-354,** thus concluding the method illustrated in FIG. 16 (Block **355).** By way of example, this may be done by setting the active NFC mode "on" or "burst" time to a given or fixed duration, and changing the power saving NFC mode time between bursts. That is, the processor **303** may cycle the NFC circuit **302** to the active NFC burst mode with longer or shorter power saving NFC mode durations therebetween. Generally speaking, the duration of the active mode pulse should be long enough to recognize a load on the electromagnetic field, such as about 60 µs, although other durations may also be used.

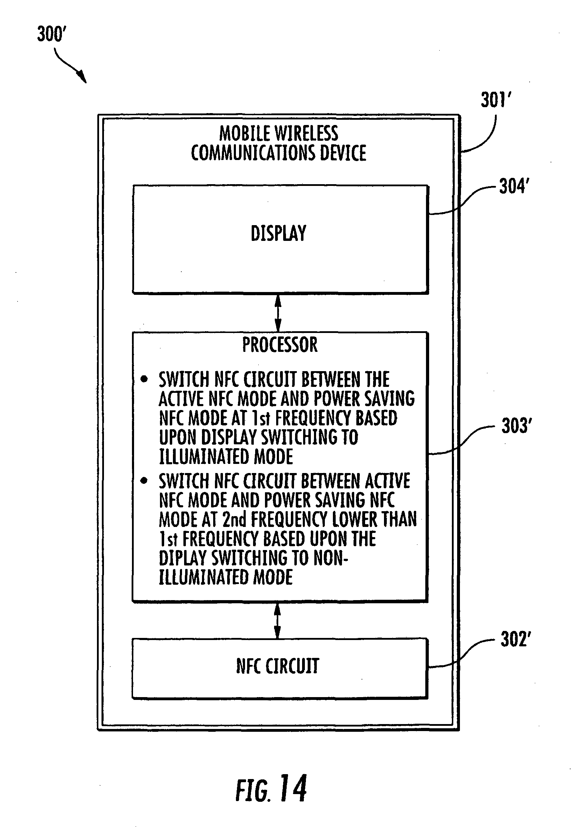

Generally speaking, the first triggering event may be an action or operation which indicates that the mobile device **300** is in use. In the example shown in FIG. 14, the mobile device **300'** includes a display **304',** and one triggering event that may indicate the mobile device is in use (i.e., a first triggering event) is when the display is illuminated. Conversely, a second triggering event which is indicative of the mobile device **300'** not being in use is when the display **304'** is not illuminated, i.e., it is in a non-illuminated or "sleep" mode. By way of example, the first frequency may be five or more times per second, whereas the second frequency may be less than five times a second (e.g., once per second), although other values for these frequencies may also be used in different embodiments. Moreover, subsequent triggers may optionally be used to further decrease the active mode cycling frequency, or turn off the active mode indefinitely in some implementations.

In some embodiments the display **304'** may be illuminated based upon a key press, etc., even if the display or mobile device **300'** is in a locked mode. Other events that may cause the display **304'** to be illuminated, or otherwise serve as a first triggering event, include a calendar reminder generated by a calendar application running on the mobile device **300',** receipt of a message (e.g., email, SMS, MMS, etc.) via a wireless network, etc. By associating the frequency at which cycling to the NFC power saving mode is performed with the operational state of the display **304',** this provides a ready indication that if the display **304'** is illuminated, then the NFC circuit **302'** is in its fastest NFC acquisition mode. The processor **303'** may be further configured to implement a delay period or lag time after the display **304'** is switched to the non-illuminated mode. This may advantageously help reduce situations where the display **304'** goes into a sleep mode (i.e., the non-illuminated mode) while the NFC circuit **302'** is attempting to engage in communications with another NFC device, which may otherwise increase the possibility of not establishing an NFC communications link therewith if the NFC circuit **302'** is switched to the slower NFC acquisition mode. Similarly, establishing an NFC communications link may serve as a first triggering event that causes the processor **303'** to switch between the active NFC mode and the power saving NFC mode at the first (i.e., faster) frequency.

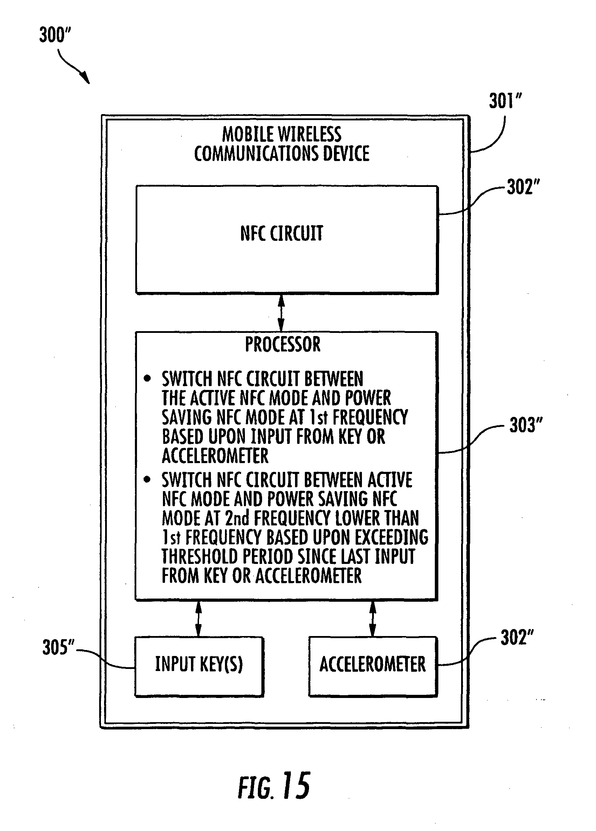

In the example shown in FIG. 15, the mobile device **300''** illustratively includes two input devices, namely an input key(s) **305''** (such as found on a keypad, a convenience key or button, etc., as noted above) and an accelerometer **306".** Other examples of input devices may include track balls, touch pads, scroll wheels, biometric sensors, touch screens, etc. With respect to a given input device, the first triggering event may comprise an input therefrom (e.g., key press, movement detection by accelerometer **306'',** etc.), while the second triggering event may comprise exceeding a threshold period since a last input is received. For example, if the input key **305"** is not pressed or no motion is detected by the accelerometer **306''** within the threshold period (e.g., ten seconds), then the processor **303"** causes the NFC circuit **302''** mode cycling to occur at the second, slower rate to thereby conserve power. Other threshold periods may be used, and in some embodiments this threshold may be user-selectable. Further, it should be noted that not all of the input devices on a given mobile device need be used for NFC mode switching purposes in all embodiments, i.e., the NFC mode switching may be associated with one or more input devices in different embodiments.

One particular advantage of using an input device for triggering the change in frequency of the NFC circuit **302''** power saving mode cycling is that input from a particular key **305''** or the accelerometer **306''** need not "wake up" (i.e., illuminate) the display **304',** which may help provide further power savings if NFC communications may be performed in the background, for example. In such embodiments, a "click" from the key **305''** or other feedback may be used to provide a suitable indication that the NFC mode switching frequency has been changed without the need for visual verification on the display **304'.** With respect to the accelerometer **306'',** NFC communications typically require "swiping" of another NFC device, and therefore movement of the mobile device **300'',** may be taken to mean that the device is being carried or transported, making the first NFC mode switching frequency more appropriate, while the second frequency would be more appropriate when the mobile device is at rest. It should be noted that other input devices or sensors may similarly be used to detect when the mobile device **300''** is held in a hand or being moved (e.g., infrared (IR) sensor, motion sensor, image (e.g., camera) sensor, etc.).

The mobile devices **300, 300',** and **300''** may further include one or more wireless transceivers (e.g., cellular, WiFi, WiMAX, etc.), and the processors **303, 303',** and **303''** may also be configured for communicating email messages, as discussed further above. A non-transitory computer-readable medium is also provided for causing the NFC circuit **302** to switch between the active NFC mode and the power saving NFC mode at a first frequency based upon a first triggering event, and switch between the active NFC mode and the power saving NFC mode at a second frequency lower than the first frequency based upon a second triggering event different than the first triggering event, as discussed further above.

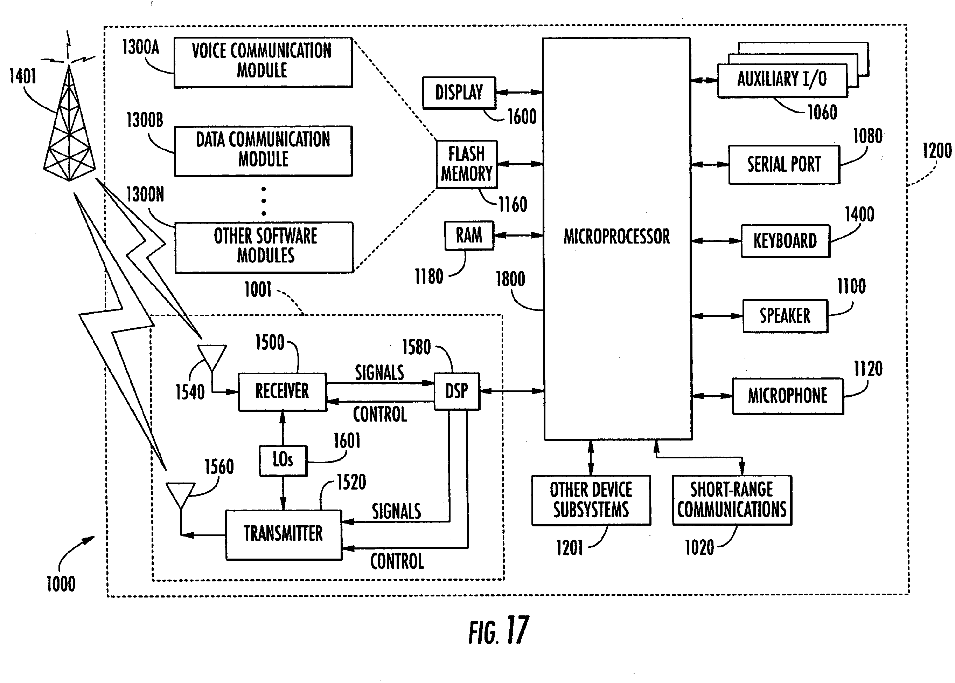

Example components of a mobile wireless communications device **1000** that may be used in accordance with an example embodiment are further described below with reference to FIG. 17. The device **1000** illustratively includes a housing **1200,** a keyboard or a keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 17. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the MobiLex™, Data TAC™ or General Packet Radio Service (CPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the **antenna 1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, NFC or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (30) comprising:
a portable housing (33);
an input key (35) carried by said portable housing;
a near-field communication NFC circuit (36) carried by said portable housing and being switchable between a first NFC mode and a second NFC mode; and
a processor (37) carried by said portable housing and coupled to said NFC circuit and said input key and configured to
initiate switching of said NFC circuit between the first NFC mode and the second NFC mode at an initial frequency, and with a first level of security, based upon a first triggering event as a first manipulation pattern of said input key,
switch said NFC circuit between the first NFC mode and the second NFC mode at another frequency higher than the initial frequency and with a second level of security with lessened requirements relative to the first level based upon a second triggering event as a second manipulation pattern of said input key different from the first manipulation pattern; and
switch said NFC circuit between the first NFC mode and the second NFC mode at the initial frequency and with the first level of security based upon a third triggering event as a threshold period since a last input of said input key.

2. The mobile wireless communications device (30) of Claim 1 further comprising a display (38) carried by said portable housing (33); wherein the display is coupled to said processor (37); wherein the display is switchable between an illuminated mode and a non-illuminated mode.

3. The mobile wireless communications device (30) of Claim 2 wherein said processor (37) is further configured to switch said NFC circuit (36) at the another frequency after a delay period.

4. The mobile wireless communications device (30) of Claim 1 wherein the first NFC mode comprises an active NFC mode and/or wherein the second NFC mode comprises a passive NFC mode.

5. The mobile wireless communications device (30) of Claim 1 further comprising a wireless transceiver carried by said portable housing (33) and coupled to said processor (37).

6. A method of using a mobile wireless communications device (30) comprising a portable housing (33), an input key (35) carried by the portable housing, and a near-field communication NFC circuit (36) carried by the portable housing and being switchable between a first NFC mode and a second NFC mode, the method comprising:
initiating switching the NFC circuit between the first NFC mode and the second NFC mode at an initial frequency, and with a first level of security, based upon a first triggering event as a first manipulation pattern of the input key;
switching the NFC circuit between the first NFC mode and the second NFC mode at another second frequency higher than the first frequency and with a second level of security with lessened requirements relative to the first level based upon a second triggering event as a second manipulation pattern of said input key different from the first manipulation pattern; and
switching the NFC circuit between the first NFC mode and the second NFC mode at the initial frequency and with the first level of security based upon a third triggering event as a threshold period since a last input of said input key.

7. The method of Claim 6 wherein the mobile wireless communications device (30) further comprises a display (38) carried by the portable housing (33); wherein the display is switchable between an illuminated mode and a non-illuminated mode.

8. The method of Claim 7 wherein switching the NFC circuit (36) between the first NFC mode and the second NFC mode at the another frequency further comprises switching the NFC circuit at the another frequency after a delay period.

9. A non-transitory computer-readable medium for causing a mobile wireless communications device (30) comprising a portable housing (33); an input key (35) carried by said portable housing; and a near-field communication, NFC, circuit carried by the portable housing (33); and being switchable between a first NFC mode and a second NFC mode and a processor (37) carried by said portable housing and coupled to said NFC circuit and said input key to perform steps comprising:
initiating switching the NFC circuit between the first NFC mode and the second NFC mode at an initial frequency, and with a first level of security, based upon a first triggering event as a first manipulation pattern of said input key; and
switching said NFC circuit between the first NFC mode and the second NFC mode at another frequency higher than the initial frequency and with a second level of security with lessened requirements relative to the first level based upon a second triggering event as a second manipulation pattern of said input key different from the first manipulation pattern; and
switching said NFC circuit between the first NFC mode and the second NFC mode at the initial frequency and with the first level of security based upon a third triggering event as a threshold period since a last input of said input key.

10. The computer-readable medium of Claim 9 wherein the mobile wireless communications device further comprises a display carried by the portable housing and being switchable between an illuminated mode and a non-illuminated mode.

## Patentansprüche

1. Eine mobile drahtlose Kommunikationsvorrichtung (30), die aufweist:
ein tragbares Gehäuse (33);
eine Eingabetaste (35), die von dem tragbaren Gehäuse getragen wird;
eine Nahfeldkommunikations(NFC - near-field communication)-Schaltung (36), die von dem tragbaren Gehäuse getragen wird und zwischen einem ersten NFC-Modus und einem zweiten NFC-Modus umschaltbar ist; und
einen Prozessor (37), der von dem tragbaren Gehäuse getragen wird und mit der NFC-Schaltung und der Eingabetaste gekoppelt ist und konfiguriert ist zum
Initiieren eines Schaltens der NFC-Schaltung zwischen dem ersten NFC-Modus und dem zweiten NFC-Modus bei einer anfänglichen Frequenz und mit einer ersten Sicherheitsstufe basierend auf einem ersten Auslöseereignis als ein erstes Manipulationsmuster der Eingabetaste,
Schalten der NFC-Schaltung zwischen dem ersten NFC-Modus und dem zweiten NFC-Modus bei einer anderen Frequenz, die höher als die anfängliche Frequenz ist, und mit einer zweiten Sicherheitsstufe mit geringeren Anforderungen relativ zu der ersten Stufe basierend auf einem zweiten Auslöseereignis als ein zweites Manipulationsmuster der Eingabetaste, das von dem ersten Manipulationsmuster verschieden; und
Schalten der NFC-Schaltung zwischen dem ersten NFC-Modus und dem zweiten NFC-Modus bei der anfänglichen Frequenz und mit der ersten Sicherheitsstufe basierend auf einem dritten Auslöseereignis als eine Schwellenzeitdauer seit einer letzten Eingabe der Eingabetaste.

2. Die mobile drahtlose Kommunikationsvorrichtung (30) gemäß Anspruch 1, die weiter eine Anzeige (38) aufweist, die von dem tragbaren Gehäuse (33) getragen wird; wobei die Anzeige mit dem Prozessor (37) gekoppelt ist; wobei die Anzeige zwischen einem beleuchteten Modus und einem nicht-beleuchteten Modus umschaltbar ist.

3. Die mobile drahtlose Kommunikationsvorrichtung (30) gemäß Anspruch 2, wobei der Prozessor (37) weiter konfiguriert ist zum Schalten der NFC-Schaltung (36) bei der anderen Frequenz nach einer Verzögerungsperiode.

4. Die mobile drahtlose Kommunikationsvorrichtung (30) gemäß Anspruch 1, wobei der erste NFC-Modus einen aktiven NFC-Modus aufweist und/oder wobei der zweite NFC-Modus einen passiven NFC-Modus aufweist.

5. Die mobile drahtlose Kommunikationsvorrichtung (30) gemäß Anspruch 1, die weiter einen drahtlosen Transceiver aufweist, der von dem tragbaren Gehäuse (33) getragen wird und mit dem Prozessor (37) gekoppelt ist.

6. Ein Verfahren zur Verwendung einer mobilen drahtlosen Kommunikationsvorrichtung (30), die aufweist ein tragbares Gehäuse (33), eine Eingabetaste (35), die von dem tragbaren Gehäuse getragen wird, und eine Nahfeldkommunikations(NFC - near-field communication)-Schaltung (36), die von dem tragbaren Gehäuse getragen wird und zwischen einem ersten NFC-Modus und einem zweiten NFC-Modus umschaltbar ist, wobei das Verfahren aufweist:
Initiieren eines Schaltens der NFC-Schaltung zwischen dem ersten NFC-Modus und dem zweiten NFC-Modus bei einer anfänglichen Frequenz und
mit einer ersten Sicherheitsstufe basierend auf einem ersten Auslöseereignis als ein erstes Manipulationsmuster der Eingabetaste,
Schalten der NFC-Schaltung zwischen dem ersten NFC-Modus und dem zweiten NFC-Modus bei einer anderen zweiten Frequenz, die höher als die erste Frequenz ist, und mit einer zweiten Sicherheitsstufe mit geringeren Anforderungen relativ zu der ersten Stufe basierend auf einem zweiten Auslöseereignis als ein zweites Manipulationsmuster der Eingabetaste, das von dem ersten Manipulationsmuster verschieden; und
Schalten der NFC-Schaltung zwischen dem ersten NFC-Modus und dem zweiten NFC-Modus bei der anfänglichen Frequenz und mit der ersten Sicherheitsstufe basierend auf einem dritten Auslöseereignis als eine Schwellenzeitdauer seit einer letzten Eingabe der Eingabetaste.

7. Das Verfahren gemäß Anspruch 6, wobei die mobile drahtlose Kommunikationsvorrichtung (30) weiter eine Anzeige (38) aufweist, die von dem tragbaren Gehäuse (33) getragen wird; wobei die Anzeige zwischen einem beleuchteten Modus und einem nicht-beleuchteten Modus umschaltbar ist.

8. Das Verfahren gemäß Anspruch 7, wobei das Schalten der NFC-Schaltung (36) zwischen dem ersten NFC-Modus und dem zweiten NFC-Modus bei der anderen Frequenz weiter aufweist ein Schalten der NFC-Schaltung bei der anderen Frequenz nach einer Verzögerungsperiode.

9. Ein nicht-transitorisches computerlesbares Medium zum Veranlassen einer mobilen drahtlosen Kommunikationsvorrichtung (30), die aufweist ein tragbares Gehäuse (33); eine Eingabetaste (35), die von dem tragbaren Gehäuse getragen wird; und eine Nahfeldkommunikations(NFC - near-field communication)-Schaltung, die von dem tragbaren Gehäuse (33) getragen wird; und zwischen einem ersten NFC-Modus und einem zweiten NFC-Modus umschaltbar ist, und einen Prozessor (37), der von dem tragbaren Gehäuse getragen wird und mit der NFC-Schaltung und der Eingabetaste gekoppelt ist, Schritte durchzuführen, die aufweisen:
Initiieren eines Schaltens der NFC-Schaltung zwischen dem ersten NFC-Modus und dem zweiten NFC-Modus bei einer anfänglichen Frequenz und
mit einer ersten Sicherheitsstufe basierend auf einem ersten Auslöseereignis als ein erstes Manipulationsmuster der Eingabetaste; und Schalten der NFC-Schaltung zwischen dem ersten NFC-Modus und dem zweiten NFC-Modus bei einer anderen Frequenz, die höher als die anfängliche Frequenz ist, und mit einer zweiten Sicherheitsstufe mit geringeren Anforderungen relativ zu der ersten Stufe basierend auf einem zweiten Auslöseereignis als ein zweites Manipulationsmuster der Eingabetaste, das von dem ersten Manipulationsmuster verschieden; und
Schalten der NFC-Schaltung zwischen dem ersten NFC-Modus und dem zweiten NFC-Modus bei der anfänglichen Frequenz und mit der ersten Sicherheitsstufe basierend auf einem dritten Auslöseereignis als eine Schwellenzeitdauer seit einer letzten Eingabe der Eingabetaste.

10. Das computerlesbare Medium gemäß Anspruch 9, wobei die mobile drahtlose Kommunikationsvorrichtung weiter eine Anzeige aufweist, die von dem tragbaren Gehäuse getragen wird und zwischen einem beleuchteten Modus und einem nicht-beleuchteten Modus umschaltbar ist.

## Revendications

1. Dispositif de communication mobile sans fil (30) comprenant :
un boîtier portatif (33) ;
une touche d'entrée (35) supportée par ledit boîtier portatif ;
un circuit de communication en champ proche, NFC, (36) supporté par ledit boîtier portatif et pouvant être commuté entre un premier mode NFC et un deuxième mode NFC ; et
un processeur (37) supporté par ledit boîtier portatif et couplé audit circuit NFC et à ladite touche d'entrée et configuré pour :
lancer la commutation dudit circuit NFC entre le premier mode NFC et le deuxième mode NFC à une fréquence initiale et avec un premier niveau de sécurité, en fonction d'un premier événement déclencheur prenant la forme d'un premier motif de manipulation de ladite touche d'entrée ;
commuter ledit circuit NFC entre le premier mode NFC et le deuxième mode NFC à une autre fréquence, supérieure à la fréquence initiale, et avec un deuxième niveau de sécurité répondant à des exigences moindres par rapport au premier niveau, en fonction d'un deuxième événement déclencheur prenant la forme d'un deuxième motif de manipulation de ladite touche d'entrée, différent du premier motif de manipulation ; et
commuter ledit circuit NFC entre le premier mode NFC et le deuxième mode NFC à la fréquence initiale et avec le premier niveau de sécurité, en fonction d'un troisième événement déclencheur prenant la forme d'un seuil de temps écoulé depuis une dernière entrée de ladite touche d'entrée.

2. Dispositif de communication mobile sans fil (30) selon la revendication 1, comprenant en outre un écran d'affichage (38) supporté par ledit boîtier portatif (33) ;
dans lequel l'écran d'affichage est couplé audit processeur (37) ;
dans lequel l'écran d'affichage peut être commuté entre un mode éclairé et un mode non éclairé.

3. Dispositif de communication mobile sans fil (30) selon la revendication 2, dans lequel ledit processeur (37) est en outre configuré pour commuter ledit circuit NFC (36) vers une autre fréquence après une période de temps.

4. Dispositif de communication mobile sans fil (30) selon la revendication 1, dans lequel le premier mode NFC consiste en un mode NFC actif et/ou dans lequel le deuxième mode NFC consiste en un mode NFC passif.

5. Dispositif de communication mobile sans fil (30) selon la revendication 1, comprenant en outre un émetteur-récepteur sans fil supporté par ledit boîtier portatif (33) et couplé audit processeur (37).

6. Procédé d'utilisation d'un dispositif de communication mobile sans fil (30) comprenant un boîtier portatif (33), une touche d'entrée (35) supportée par le boîtier portatif et un circuit de communication en champ proche, NFC, (36) supporté par ledit boîtier portatif et pouvant être commuté entre un premier mode NFC et un deuxième mode NFC, le procédé comprenant les étapes consistant à :
lancer la commutation dudit circuit NFC entre le premier mode NFC et le deuxième mode NFC à une fréquence initiale et avec un premier niveau de sécurité, en fonction d'un premier événement déclencheur prenant la forme d'un premier motif de manipulation de ladite touche d'entrée ;
commuter ledit circuit NFC entre le premier mode NFC et le deuxième mode NFC à une deuxième fréquence autre, supérieure à la fréquence initiale, et avec un deuxième niveau de sécurité répondant à des exigences moindres par rapport au premier niveau, en fonction d'un deuxième événement déclencheur prenant la forme d'un deuxième motif de manipulation de ladite touche d'entrée, différent du premier motif de manipulation ; et
commuter ledit circuit NFC entre le premier mode NFC et le deuxième mode NFC à la fréquence initiale et avec le premier niveau de sécurité, en fonction d'un troisième événement déclencheur prenant la forme d'un seuil de temps écoulé depuis une dernière entrée de ladite touche d'entrée.

7. Procédé selon la revendication 6, dans lequel le dispositif de communication mobile sans fil (30) comprend en outre un écran d'affichage (38) supporté par le boîtier portatif (33) ;
dans lequel l'écran d'affichage peut être commuté entre un mode éclairé et un mode non éclairé.

8. Procédé selon la revendication 7, dans lequel l'étape de commutation du circuit NFC (36) entre le premier mode NFC et le deuxième mode NFC à l'autre fréquence comprend en outre l'étape consistant à commuter le circuit NFC vers l'autre fréquence après une période de temps.

9. Support non volatil lisible par ordinateur destiné à commander un dispositif de communication mobile sans fil (30) comprenant un boîtier portatif (33) ; une touche d'entrée (35) supportée par ledit boîtier portatif ; un circuit de communication en champ proche, NFC, supporté par ledit boîtier portatif (33) et pouvant être commuté entre un premier mode NFC et un deuxième mode NFC ; et un processeur (37) supporté par ledit boîtier portatif et couplé audit circuit NFC et à ladite touche d'entrée et configuré pour exécuter les étapes consistant à :
lancer la commutation dudit circuit NFC entre le premier mode NFC et le deuxième mode NFC à une fréquence initiale et avec un premier niveau de sécurité, en fonction d'un premier événement déclencheur prenant la forme d'un premier motif de manipulation de ladite touche d'entrée ;
commuter ledit circuit NFC entre le premier mode NFC et le deuxième mode NFC à une autre fréquence, supérieure à la fréquence initiale, et avec un deuxième niveau de sécurité répondant à des exigences moindres par rapport au premier niveau, en fonction d'un deuxième événement déclencheur prenant la forme d'un deuxième motif de manipulation de ladite touche d'entrée, différent du premier motif de manipulation ; et
commuter ledit circuit NFC entre le premier mode NFC et le deuxième mode NFC à la fréquence initiale et avec le premier niveau de sécurité, en fonction d'un troisième événement déclencheur prenant la forme d'un seuil de temps écoulé depuis une dernière entrée de ladite touche d'entrée.

10. Support lisible par ordinateur selon la revendication 9, dans lequel le dispositif de communication mobile sans fil comprend en outre un écran d'affichage supporté par le boîtier portatif et pouvant être commuté entre un mode éclairé et un mode non éclairé.
